Europäisches Patentamt

European Patent Office

Office européen des brevets

(11) Veröffentlichungsnummer: **0 168 797**
A2

(12) **EUROPÄISCHE PATENTANMELDUNG**

(21) Anmeldenummer: 85108817.9

(22) Anmeldetag: 15.07.85

(51) Int. Cl.⁴: **B 60 S 3/04**, A 47 L 17/06

(30) Priorität: 14.07.84 DE 3425958

(43) Veröffentlichungstag der Anmeldung: 22.01.86
Patentblatt 86/4

(84) Benannte Vertragsstaaten: AT BE CH DE FR GB IT LI LU
NL SE

(71) Anmelder: Alligator Ventilfabrik GmbH, Postfach 1280,
D-7928 Giengen/Brenz (DE)

(72) Erfinder: von Zabern, Werner, Herbrandtstrasse 14,
D-7928 Giengen/Brenz (DE)

(74) Vertreter: Hiebsch, Gerhard F., Dipl.-Ing.,
Erzbergerstrasse 5A Postfach 464, D-7700 Singen 1 (DE)

(54) Vorrichtung zum Enteisen insbesondere von Windschutzscheiben.

(57) Eine Vorrichtung zum Enteisen von Flächen, insbesondere von Windschutzscheiben, mit wenigstens einer quer zu einem Griffstück verlaufenden Kratzkante und einer dieser zugeordneten Wärmequelle, soll eine wirkungsvolle Enteisung ohne Benutzung einer Stromquelle ermöglichen.

Hierzu ist die Kratzkante (40) mit einem Gehäuse (41) verbunden, in dessen Innenraum (17) wenigstens eine gasführende Leitung (19, 20) mit anschliessendem Glühelement (21) vorgesehen und diesem in Abstand eine Zündeinrichtung (30) zugeordnet ist. Dabei soll das Glühelement (21) eine zwischen einem Innenkäfig (23) und einem Aussenkäfig (24) verlaufende Glühschicht (26) zur Aufnahme von Gas aufweisen. Auch kann das Glühelement (21) in Abstand zu der elektrisch ausgebildeten Zündeinrichtung (30) enden, wobei die Zündeinrichtung gegebenenfalls ein Glühfaden (30) ist.

*– 1 –*

Vorrichtung zum Enteisen insbesondere von Windschutzscheiben

Die Erfindung betrifft eine Vorrichtung zum Enteisen von
Flächen, insbesondere von Windschutzscheiben, mit wenigstens einer quer zu einem Griffstück verlaufenden Kratzkante  und einer dieser zugeordneten Wärmequelle.

Eine Vorrichtung dieser Art ist der Schrift zum Gebrauchsmuster 79 17 327 zu entnehmen mit einer U-förmigen Schiene
an einem dazu quer verlaufenden Handgriff. Die U-Schiene
nimmt eine elektrischen Heizstab auf, welcher über eine
Leitung mit der Autobatterie verbunden werden kann.

Derartige Eiskratzer bringen den Nachteil mit sich, daß
    zum einen der Anschluß an die Autobatterie nicht ohne
Aufwand möglich ist, zum anderen die Heizleistung nur in
begrenztem Maße einen wirkungsvollen Einsatz ermöglicht.

-2-

Angesichts dieser Gegebenheiten hat sich der Erfinder
das Ziel gesetzt, eine Vorrichtung der eingangs erwähnten Art so auszugestalten, daß eine wirkungsvolle
Enteisung ohne Benutzung einer Stromquelle möglich
wird.

Zur Lösung dieser Aufgabe führt, daß die Kratzkante an
einem Gehäuse angeordnet ist, in dessen Innenraum wenigstens eine gasführende Leitung mit anschließendem Glühelement vorgesehen und diesem in Abstand eine Zündeinrichtung zugeordnet ist. Dabei hat es sich als günstig
erwiesen, das Glühelement eine zwischen einem Innenkäfig
und einem Außenkäfig verlaufende Glühschicht zur Aufnahme
von Gas aufweisen zu lassen. Dies ergibt eine stromquellenunabhängige Wärmeinrichtung; das in die Glühschicht eindringende Gas -- bevorzugt Feuerzeugbrennstoff -- wird in
einer unschädlichen Weise zum Glühen gebracht und entwickelt eine ausreichende Hitze, um das an der nahen Gehäusewandung anstehende Eis anzuschmelzen, so daß es ohne
weiteres abfließen kann.

Es erfolgt hier also bevorzugt eine Wärmeerzeugung mittels
eines Glühkörpers aus einem Fadengelege, das beispielsweise mit Nitraten der seltenen Erden getränkt ist und
als Gerüst aus mineralischen Bestandteilen ausgezeichnete
Festigkeiten entwickelt.

Erfindungsgemäß wird das Glühelement von einer dazu in
Abstand verlaufenden, elektrisch zu betätigenden Zündeinrichtung zum Glühen gebracht, bevorzugt durch einen
Glühfaden, welcher von zwei starren Leitern gehalten wird.

Zur Erhöhung der Sicherheit wird erfindungsgemäß ein
Druckschalter in die von einem Gasbehälter kommende
gasführende Leitung eingebaut, so daß nur bei bleibendem Druck durch den Benutzer eine Gaszufuhr aufrechterhalten bleibt. Im Rahmen der Erfindung kann im übrigen
auch der Zündeinrichtung ein entsprechender Druckschalter
zugeordnet werden.

Der Gasbehälter wird vom Griffstück gebildet, dessen
Ende ein Einsatzventil zum Einschieben des Auslaßstutzens
einer Nachfüllpatrone aufweist - auch diese einfache Nachfüllmöglichkeit, welche jener von Feuerzeugen ähnelt, erhöht die Sicherheit der Vorrichtung.

Um die Wärme möglichst unmittelbar an die zu enteisende
Windschutzscheibe gelangen zu lassen, sind der Kratzkante
Gehäuseschlitze zugeordnet, außerdem kann als Zusatzeinrichtung eine Dämmhaube vorgesehen werden, welche den
eigentlichen Kratzkörper in Abstand überspannt und mit
einer freien Kante der Windschutzscheibe etwa anliegt;
hierdurch entsteht ein zusätzlicher Wärmeraum an der Windschutzscheibe.

Die Kratzkante ist erfindungsgemäß aus dem starren Werkstoff des Gehäuses geformt, ihr ist bevorzugt eine weitere
Gehäusekratzkante zugeordnet. Beide Kratzkanten des Gehäuses können zwischen sich noch eine Kratzlippe aus
begrenzt elastischem Werkstoff aufnehmen, die der zu bearbeitenden Windschutzscheibe leicht anliegt und beim
Schmelzvorgang fallende Tropfen abfängt.

Im Rahmen der Erfindung liegt eine weitere Lösung, wodurch das Gehäuse eine Aerosolflasche oder eine entsprechend auswechselbare Kartusche mit einem Mischraum für ein Gas/Luft-Gemisch verbindet sowie der Weg des Gases von der Kartusche zum Mischraum durch eine Regeleinrichtung schließbar ist; dem Mischraum ist ein Brennraum in Strömungsrichtung nachgeordnet.

Um die Vorrichtung möglichst handlich und klein zu halten, sind als Behälter für das Brenngas Einwegkartuschen vorgesehen.

Das Behältervolumen kann nicht willkürlich festgelegt werden.

Die Abfülltemperatur beträgt $20^oC$. Dabei hat ein Gemisch aus 60 % Propan und 40 % Butan eine Dichte von ca. 0,54. Zur Verbesserung der Gegebenheiten beim Austritt des Butans aus der Kartusche ist erfindungsgemäß ein Schaumstoffkörper in die Kartusche eingelegt. Die Menge des Schaumstoffs ist so bemessen, daß er die verflüssigten Gase restlos aufsaugen kann. Bei einer solchen Füllung treten keine flüssigen Bestandteile mehr aus.

Nach einem weiteren Merkmal der Erfindung ragt in den Mischraum ein an sich bekannter Piezozünder ein. Piezozünder sind mechanisch robust und funktionieren anstandslos bis zu Temperaturen von $-40^oC$.

Als besonders günstig hat es sich erwiesen, dem Mischraum in Strömungsrichtung einen keramischen Körper
mit Bohrungen oder in offenzelliger Schaumstruktur
nachzuordnen; solche Keramikkörper sind als Katalysatorträger bekannt. Im keramischen Material ist eine
Vielzahl kleiner Kavernen vorhanden, in denen das Gas
verbrennt. Dabei liegt der Arbeitsdruck ungefähr bei
50 mbar. Die Keramik enthält katalytisch wirkende Stoffe,
die die Verbrennung begünstigen.

Beim herkömmlichen Eiskratzer wird das Eis auf rein
mechanische Weise entfernt. Dadurch findet man bei
solchen Geräten immer eine Art Schneidkante, die die
Zersplitterung des Eises ermöglicht. Erfindungsgemäß
soll stattdessen ein Maximum an Energie so schnell und
so gleichmäßig wie nur möglich an die zu enteisende
Fläche gelangen.

Das stöchiometrische Verhältnis von Brenngas zu Luft
darf sich nur innerhalb bestimmter Grenzen bewegen,
damit ein solches Gemisch als zündfähig betrachtet
werden kann. Die untere Grenze liegt bei einem Anteil
des Brenngases von ca. 2,5 Vol.-%, die obere bei ca.
9,5 Vol.-%. Ist der Anteil des Brenngases höher, spricht
man von einem überfetteten, im umgekehrten Falle von
einem zu mageren Gemisch. Solche Gemische sind nur bedingt oder überhaupt nicht zündfähig.

Die Gemischbildung erfolgt dadurch, daß der aus der
Gasdüse austretende Gasstrom einen Unterdruckkanal
erzeugt, in den die unter atmosphärischem Druck stehende

A-134                                              -6-


Umgebungsluft eindringen kann. Dabei hängt die Gemischzusammensetzung im wesentlichen von der Zutrittsfläche
('Luftbohrung') und der Strömungsgeschwindigkeit ab.
Der entstehende Unterdruck ist bei stark vereinfachter
Betrachtungsweise der Austrittsgeschwindigkeit in etwa
proportional. Bei gleicher Zutrittsfläche für die Umgebungsluft wird daher die Gemischzusammensetzung ungefähr proportional der Strömungsgeschwindigkeit sein.

Erfindungsgemäß muß ein Druckregler vor der Gasdüse
vorgesehen werden, der in erster Linie in der Lage sein
muß, den Arbeitsdruck konstant zu halten. Zudem kann
nach der Erfindung eine solche Festwertregelung von
einer temperaturabhängigen Steuerung überlagert sein,
die es ermöglicht, bei kaltem Brennerkopf den Durchsatz
zu erhöhen bzw. bei Überhitzung den Durchsatz zu drosseln.

Bei einem Prallplattenregler, bei dem die Einlaufdüse
konisch geformt ist, wird der Druckunterschied von einer
Druckfeder aufgenommen. Die Trennung der Kammern erfolgt
mittels einer Flachmembrane.

Vorteilhafterweise ist ein Proportionalregler vorgesehen.

Als Sicherung gegen Rückschlag der Flamme haben sich
Elemente aus porösem Sintermetall  eingebürgert. Nicht
vernachlässigt werden sollte der Strömungswiderstand
eines solchen Bauteils, wie folgende Rechnung zeigen
soll.

                                                   -7-

Der Gasstrom wird durch eine Scheibe aus Sintermetall geleitet. Die Scheibe hat eine Dicke von 2,5 mm und einen Durchmesser von 3 mm mit einer Fläche von 0,0706 cm$^2$. Der Durchfluß beträgt 100 g/h.

100 g/h entsprechen etwa 0,05 m$^3$/h. Die Durchflußrate beträgt somit 0,05 m$^3$/h / 0,076 cm$^2$) = 0,657 (m$^3$/h/cm$^2$).

Der Druckabfall hängt jetzt nur noch von der Korngröße des verwendeten Sintermetalls ab:

Korngröße     10 μm        Druckabfall 500 mbar
Korngröße     50 μm        Druckabfall  40 mbar
Korngröße    100 μm        Druckabfall  20 mbar

Obige Beispiele zeigen, daß der Einfluß einer solchen Sicherung aus Sintermetall keinesfalls vernachlässigt werden darf.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in

Fig. 1:     eine Schrägsicht auf einen teilweise aufgebrochenen Eiskratzer mit Glüheinrichtung;

Fig. 2:     den Längsschnitt durch Fig. 1 nach deren Linie
            II - II;

Fig. 3:     den gegenüber Fig. 1 vergrößerten Querschnitt
            gemäß deren Linie III - III;

Fig. 4:     einen Teillängsschnitt durch einen anderen Eiskratzer mit einer Aerosoldose als Gasquelle;

Fig. 5:     eine verkleinerte Frontsicht zu Fig. 4;

Fig. 6:     ein vergrößertes Detail aus Fig. 4 in geänderter Ausführung als Balkenregler;

Fig. 7:     eine der Fig. 6 entsprechende Darstellung
            eines Feinstellreglers;

Fig. 8:     einen Teillängsschnitt durch einen weiteren
            Eiskratzer.

Auf einer Windschutzscheibe 1 eines nicht weiter wiedergegebenen Kraftfahrzeuges ist ein Eiskratzer 10 zum Ablösen einer jener Windschutzscheibe 1 überlagernden Eisschicht 2 zu erkennen.

Der Eiskratzer 10 besteht aus einem zylindrischen Griffstück 10 und einem an dieses angeformten Kratzkörper 12,
dessen Längsachse A die Längsachse B des Griffstückes
10 rechtwinklig kreuzt. Die aus Gründen der Fertigung
und Handhabung vorgesehene Trennung der aus Kunststoff
geformten beiden Hauptteile 11,12 des Eiskratzers 10 in
zumindest zwei Schalenhälften ist in der Zeichnung aus
Gründen der Übersichtlichkeit vernachläßigt.

Das Griffstück 10 ist als Aufnahmebehälter für Flüssiggas mit einem im Boden 13 des Griffstückes 11 angedeuteten Aufnahmeventil 14 ausgebildet, an welches
beispielsweise handelsübliche Nachfüllpatronen für
Feuerzeuggas angeschlossen werden können.

Andernends ragt aus dem Griffstück 11 ein Ausströmventil 16 in den Innenraum 17 des Kratzkörpers 12
ein. An die in der Zeichnung nicht erkennbare Austrittsöffnung -- welche durch einen Druckschalter
18 geöffnet und geschlossen werden kann -- schließt
ein T-förmiges Gasrohr 19 an, dessen Querrohr 20 beidseits der Längsachse B in jeweils einem Glühkäfig 21
endet. Der Glühkäfig 21 ist an einer Haltelasche 22
festgelegt und besteht aus einem endwärts geschlossenen
Innenkäfig 23, einem zylindrischen Außenkäfig 24 mit
freier Stirnkante 25 sowie einer zwischengefügten Lage
aus Glimmwatte oder einem getränkten mineralischen Fadengerüst.

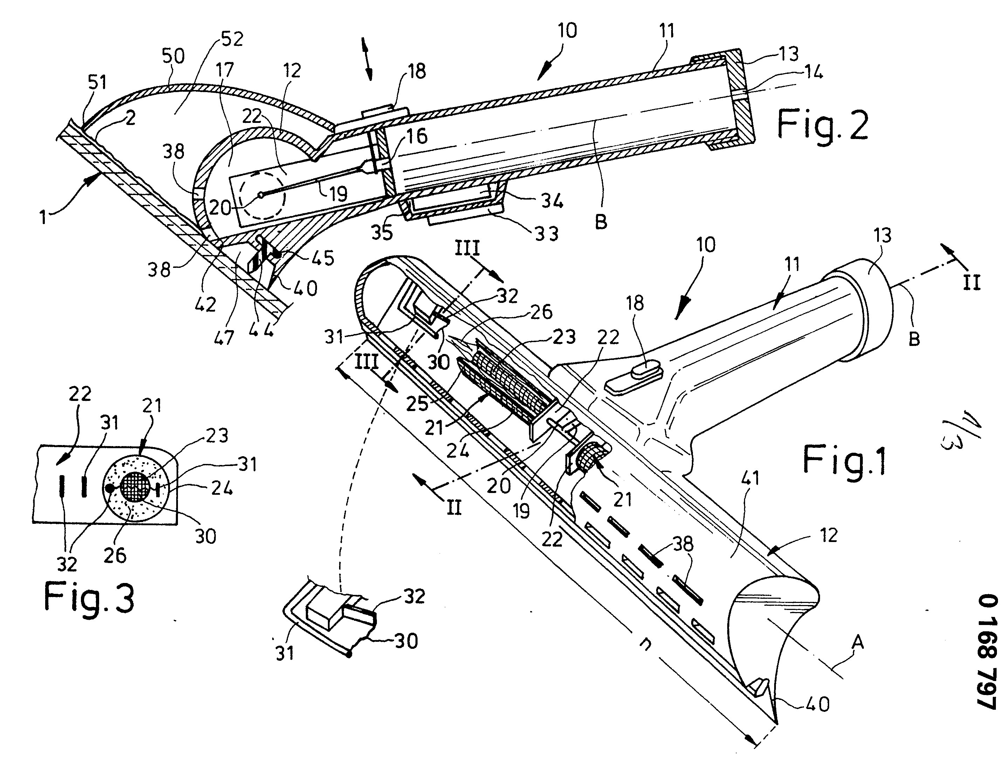

In den Innenkäfig 23 einströmendes Gas wird durch einen Glühfaden 30 gezündet, der zwischen zwei Leiterstäben 31,32 verläuft. Letztere sind gemäß Fig. 3 --
nach einer dort nicht erkennbaren Umlenkung -- durch
die Haltelasche 22 geführt und über einen Schalter 33
an eine Batterie 34 als Stromquelle angeschlossen.

A-134

Wird der Druckschalter 18 von der Hand eines Benutzers
betätigt, strömt Gas in den Glühkäfig 21 bzw. in dessen Glühlage 28; durch Betätigung des Schalters 33 wird
der Glühfaden 30 an die Stromquelle 34 angeschlossen ,
bis eine Zündung des ausströmenden Gases in den Glühkäfigen 21 erfolgt. An dieser Stelle sei darauf hingewiesen, daß der verdeckte Teil des Kratzkörpers 12 in
Fig. 1 entsprechend der offen dargestellten Hälfte
ausgestattet ist, so daß auf der gesamten Länge n
von beispielsweise 18 cm eine Erwärmung stattfindet.
Ein Einstellen des Gasstromes ist durch Verdrehen des
Bodens 13 möglich. Die im Innenraum 17 des Kratzkörpers 12
entstehende Hitze gelangt durch Schlitze 38 zur Windschutzscheibe und schmilzt die Eisschicht 2 an, welche
dann durch wenigstens eine starre Kratzrippe 40 vollends
entfernt wird. Die Kratzrippe 40 ist an das Gehäuse 41
des Kratzkörpers 12 angeformt und bildet im gewählten
Ausführungsbeispiel  mit einer den Innenraum 17 begrenzenden weiteren Längsrippe 42 ein querschnittliches
U, in welchem noch ein begrenzt elastisches T-Profil 44
erkennbar ist, dessen Kopfteil in einer hinterschnittenen
Nut 45 des Gehäuses 41 sitzt und vor allem dazu dient,
abschmelzende Eisteile zu halten und bei Bewegung des
Eiskratzers 10 abzufördern.

Der Übergang zwischen dem zylindrischen Griffstück 11
und dem querschnittlich nahezu rohrartigen Kratzkörper 12
ist zur besseren Führung der Schalter 18,33 und zur Anformung eines Batterieraumes 35 in Draufsicht zum Kratzkörper 12 hin erweitert. Dessen Boden, über dem sich
jener Teilrohrkörper wölbt, ist mit den beiden Rippen 40
und 42 einstückig und endet als das beschriebene U unter
Bildung einer breiten Nut 47 zwischen den Rippen 42 und
44; in dieser Nut 47 verläuft das erwähnte T-Profil
aus begrenzt elastischem Werkstoff.

In Fig. 2 ist oberhalb des Kratzkörpers 12 mit 50 ein
haubenartig aufgesetztes Profil zu erkennen, welches
mit seiner freien Endkante 51 der Windschutzscheibe 1
etwa anliegt und oberhalb des erwärmten Kratzkörpers 12
einen zusätzlichen Wärmeraum 52 erzeugt.

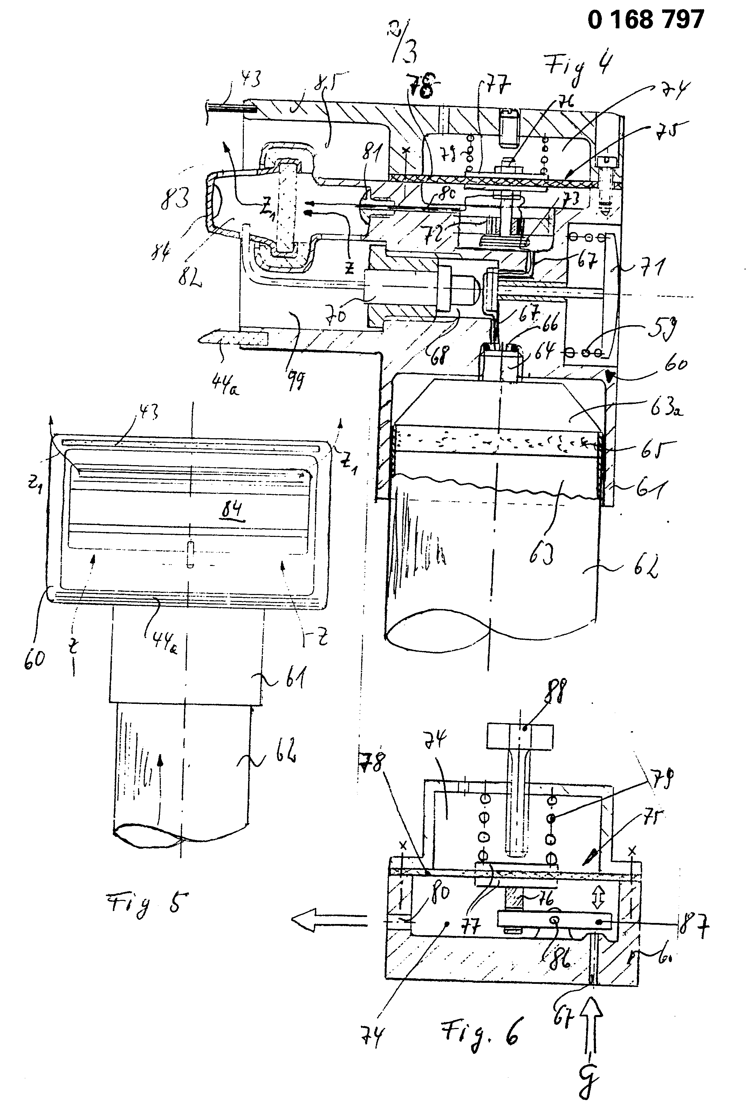

Beim Ausführungsbeispiel der Fig. 4 ist an ein Gehäuse
60 ein Rohrstumpf 61 angeformt, in den eine Aerosoldose
62 eingeschoben ist; letztere weist in ihrem -- gasenthaltenden -- Innenraum 63 eine nicht weiter dargestellte
Kegelstumpffeder sowie vor einer Austrittsdüse 64 eine
Schaumstoffplatte 65 auf, welche dank ihrer Porosität
unterschiedliche Druckräume $63, 63_a$ trennt.

Vom Einsatzraum 66 für jene Austrittsdüse führt ein
Kanal 67 zu einem Zylinderraum 68, in welchem eine
Piezo-Zündung 70 mit Druckknopf 71 zum Öffnen und Schliessen der Gaszuführung festliegt; beim Öffnen der Gaszuführung wird die Zündung 70 betätigt.

An dem in Fig. 4 oberen Ende des Gehäuses 60 ist ein
Gehäuseraum 74 mit einem Membrandruckregler 75 vorgesehen,
der Durchgangsöffnungen 72 mittels eines Tellers 73 zu
verschließen vermag. Letztere ist an einem Stift 76 und
einer Platte 77 festgelegt, welch letztere an einer eingespannten Membrane 78 liegt. An der Platte 77 ist eine
Ausgleichsfeder 79 erkennbar.

Der Weg des Gases führt bei geöffneter Durchgangsöffnung
72 durch einen weiteren Kanal 80 zu einer Gasdüse 81
und von dort zu einer Brennkammer 82, aus der durch einen Durchbruch 83 eines Brennkopfes 84 Luft (Pfeil z)

erhitzt (Pfeil $z_1$) nach außen tritt. Der Brennerkopf 84
ist in einem rohrartigen Gehäuseteil 85 rechteckigen
Querschnittes untergebracht, von dessen -- in Fig. 4
unterer -- Kante eine Kratzlippe $44_a$ und von dessen
oberer Kante eine Leiste 43 abragen. Die erhitzte Luft $z_1$
verläßt bei 83 den Brennerkopf 84 und trifft unterhalb
jener Leiste 43 auf die in Fig. 4 nicht erkennbare Windschutzscheibe 1, wo aufliegendes Eis angeschmolzen und
durch die Kratzlippe $44_a$ entfernt werden kann.

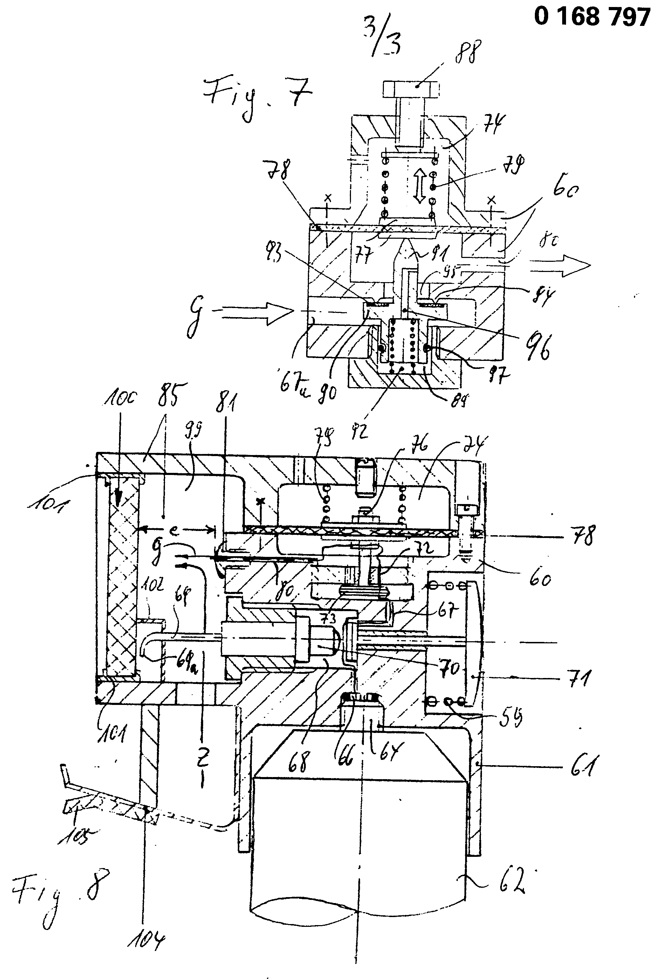

In Fig. 6 ist eine besondere Ausgestaltung des Membrandruckreglers 75 zu erkennen; der Stift 76 betätigt eine
bei 86 mittig gelagerte Regelwippe, welche den Zuflußkanal
67 unmittelbar schließen kann, so daß dort einströmendes
Gas G nicht mehr zum Auslaßkanal 80 gelangt. In Fig. 6
ist mit 88 eine Einstellschraube bezeichnet.

Eine in Fig. 7 querschnittlich dargestellte Feinstellregelung weist statt eines Stiftes einen im Gehäuse 60
beweglichen Kolbenkörper 90 auf, dessen Kolbenspitze 91 von
der Membrane 78 bewegt werden kann - und zwar gegen die
Kraft einer Schließfeder 92, wie ohne weiteres Fig. 7 entnommen werden kann. In der dort gezeigten Schließstellung
lagert ein Dichtring 93 des Kolbenkörpers 90 an einer
Ringrippe 94 des Gehäuses 60; diese Ringrippe 94 umgibt
einen Durchbruch 95, der den zuführenden Gaskanal $67_a$
mit dem Auslaßkanal 80 verbindet. Drückt die Membrane 78
bzw. deren Platte 77 auf die Kolbenspitze 91, entfernt
sich der Dichtring 93 von seiner Ringrippe 94, wobei der
Kolbenkörper 90 in eine Gehäusevertiefung 89 eintaucht;
verdrängte Luft entweicht durch eine Belüftungsbohrung 96.
In der Vorrichtung angebrachte O-Ringe sind mit 97 bezeichnet.

Die Ausführung des Eiskratzers nach Fig. 8 weist im
Innenraum 99 des Gehäuseteiles 86 ebenfalls eine
Gasdüse 81 auf, der in einem Abstand e von beispielsweise 18 mm ein Keramikbrenner 100 gegenübersteht; dieser ist in Profilstreifen 101 gehalten und verschließt
jenen Innenraum 99, den ein Rohr 69 der Piezo-Zündung 70
durchgreift; die Rohrmündung $69_a$ ist zum Innenraum 99
hin von einem Schirm 102 umgeben, so daß jene Zündung
vom Innenraum 99 getrennt und zum Keramikzünder 100 hin
gerichtet ist. Der Innenraum 99 dient als Gemischkammer
für Gas G und Luft Z. Das Gas/Luft-Gemisch wird in der
Keramikplatte 100 entzündet. Die so entstehende Strahlungswärme und ein Teil des Abgases werden direkt auf die zu
enteisende Fläche der Windschutzscheibe 1 gerichtet. Das
Eis wird hierbei lediglich angetaut und mit einem kalten
Kratzprofil 104 mit Gummilippe 105 weggeschoben. Diese
Art der Enteisung führt sehr schnell zu einer eisfreien
Windschutzscheibe 1.

Wie bereits beschrieben, erfolgt auch hier die Zündung
durch den Piezo-Zünder 70, wobei der Druckknopf 71 gegen
einen dort vorgesehenen Kraftspeicher 59 die Gaszufuhr
regelt. Aus der Aerosoldose 63 strömt ein Propan-Butan-
Gemisch über den Membrandruckregler 75 oder die Vorrichtung nach Fig. 7 zur Gasdüse 81 und vermischt sich
in jenem Innenraum 99 mit angesaugter Luft Z. Das Gas/
Luft-Gemisch verteilt sich in Bohrungen oder Poren der
Keramikplatte und brennt mit niedrigem Druck.

Der Eiskratzer nach Fig. 8 ist so ausgelegt, daß mit
ihm eine optimale Eisentfernung bei einer Umgebungstemperatur von $-15^{o}C$ möglich ist.

# PATENTANSPRÜCHE
===================================

1. Vorrichtung zum Enteisen von Flächen, insbesondere
   von Windschutzscheiben, mit wenigstens einer quer
   zu einem Griffstück verlaufenden Kratzkante und einer dieser zugeordneten Wärmequelle,

   dadurch gekennzeichnet,

   daß die Kratzkante (40) mit einem Gehäuse (41) verbunden ist, in dessen Innenraum (17) wenigstens eine
   gasführende Leitung (19,20) mit anschließendem Glühelement (21) vorgesehen und diesem in Abstand eine
   Zündeinrichtung (30) zugeordnet ist.

2. Vorrichtung nach Anspruch 1, dadurch gekennzeichnet,
   daß das Glühelement (21) eine zwischen einem Innenkäfig (23) und einem Außenkäfig (24) verlaufende
   Glühschicht (26) zur Aufnahme von Gas aufweist, und/
   oder daß das Glühelement (21) in Abstand zu der
   elektrisch ausgebildeten Zündeinrichtung (30) endet,
   wobei die Zündeinrichtung gegebenenfalls ein Glühfaden '(30) ist.

3. Vorrichtung nach Anspruch 1 oder 2, dadurch gekennzeichnet, daß die gasführende Leitung (19,20) unter
   Zwischenschaltung eines mit einem Druckschalter (18)
   verbundenen Ausströmventils (16) an einen Gasraum (11)
   angeschlossen ist, wobei gegebenenfalls der Gasraum
   (11) an die Vorrichtung angeformt und mit einem Einlaßventil (14) versehen ist.

A-134                                              -A 2-

4. Vorrichtung nach einem der Ansprüche 1 bis 3, dadurch gekennzeichnet, daß das Gehäuse (41) nahe der
   Kratzkante (40) mit Schlitzen (38) versehen ist,
   und/oder daß die Kratzkante (40) von einer Gehäuserippe gebildet sowie dieser zumindest eine weitere
   Kratzkante (42) des Gehäuses zugeordnet ist.

5. Vorrichtung nach wenigstens einem der Ansprüche 1
   bis 4, dadurch gekennzeichnet, daß der Kratzkante
   (40,42) des Gehäuses (41) wenigstens ein Kratzprofil (44) aus begrenzt elastischem Werkstoff zugeordnet ist, wobei gegebenenfalls das Kratzprofil (44)
   lösbar am Gehäuse (41) festgelegt ist.

6. Vorrichtung nach wenigstens einem der Ansprüche 1
   bis 5, dadurch gekennzeichnet, daß im Gehäuse eine
   hinterschnittene Nut (45) zur Aufnahme eines
   Kupplungsteiles des Kratzprofils (44) vorgesehen
   und/oder dem Gehäuse (41) eine mit diesem einen
   Wärmeraum (52) bildende Haube (50) zugeordnet ist.

7. Vorrichtung nach dem Oberbegriff des Anspruches 1
   oder nach wenigstens einem der voraufgehenden Ansprüche, dadurch gekennzeichnet, daß das Gehäuse
   (60) eine Aerosolflasche (62) oder eine entsprechende, ein Auslaufventil (64) aufweisende auswechselbare Kartusche mit einem Mischraum (99) für ein
   Gas/Luft-Gemisch verbindet, wobei der Weg des Gases
   von der Kartusche zum Mischraum durch eine Regeleinrichtung (73,78;78,93,94) schließbar und dem
   Mischraum ein Brennraum (82,100) in Strömungsrichtung nachgeordnet ist.

                                              -A 3-

8. Vorrichtung nach Anspruch 7, dadurch gekennzeichnet, daß in der Kartusche (62) nahe des Auslaßventils (64) ein Schaumstoffkörper (65) eingebracht
ist.

9. Vorrichtung nach Anspruch 7 oder 8, dadurch gekennzeichnet, daß in den Mischraum (99) ein Piezo-Zünder (70) einragt, dessen Steuerelement (71) mit
einer Verschlußeinrichtung für den Gasweg (67) verbunden ist.

10. Vorrichtung nach wenigstens einem der Ansprüche 7
bis 9, dadurch gekennzeichnet, daß dem Mischraum (99)
ein keramischer Körper (100) mit einer Vielzahl von
Bohrungen oder offenen Poren in Strömungsrichtung
nachgeordnet ist.

11. Vorrichtung nach wenigstens einem der Ansprüche 7
bis 10, dadurch gekennzeichnet, daß dem keramischen
Körper (100) der Piezo-Zünder (70) zugeordnet
und dieser gegen den Mischraum (99) abgeschirmt ist,
und/oder, daß dem keramischen Körper (100) wenigstens ein Kratzprofil (104,105) zugeordnet ist.

12. Vorrichtung nach wenigstens einem der voraufgehenden Ansprüche, dadurch gekennzeichnet, daß der
Gasweg (67,80) durch eine Platte (73) oder einen
Kolbenkörper (90) mit Dichtring (93) regelbar ausgebildet ist, wobei Platte bzw. Kolbenkörper in
die Bewegungsbahn einer eingespannten Membrane (78)
eingreifen.

Fig. 2

Fig. 1

Fig. 3

0 168 797

1/3

0 168 797

2/3

Fig 4

Fig 5

Fig. 6

Fig. 7

Fig. 8

0 168 797

3/3